# EUROPEAN PATENT SPECIFICATION

(11) **EP 3 097 353 B1**
(45) Date of publication and mention of the grant of the patent: **14.12.2022**
(21) Application number: 15736954.7
(22) Date of filing: 15.01.2015
(51) Int. Cl.: B01D 53/86, F01D 25/30, F01K 23/10, F02C 6/18, F01K 5/02, F23G 7/07, F23J 15/02

(54) **OPERATING A GAS TURBINE POWER PLANT AT LOW LOAD CONDITIONS**
BETRIEB EINES GASTURBINENKRAFTWERKS BEI NIEDRIGLASTBEDINGUNGEN
FONCTIONNEMENT D'UNE CENTRALE ÉLECTRIQUE ÉQUIPÉE DE TURBINES À GAZ À FAIBLES CONDITIONS DE CHARGE

(30) Priority: 17.01.2014 US 201461928897 P; 25.09.2014 US 201414496835; 25.11.2014 US 201414553498
(43) Date of publication of application: 30.11.2016
(73) Proprietor: Mitsubishi Power Americas, Inc., Lake Mary, FL 32746 (US)
(72) Inventor: MCDEED, David, Lake Mary, FL 32746 (US); PYROS, George, Lake Mary, FL 32746 (US); BRAVATO, Anthony, Lake Mary, FL 32746 (US)
(74) Representative: Grund, Martin
(86) International application number: PCT/US2015/011563
(87) International publication number: WO 2015/109072

(56) References cited:
- DE-A1- 4 027 329
- JP-A- H09 103 648
- US-A1- 2010 086 458
- US-A1- 2010 215 558
- US-A1- 2011 217 221
- US-A1- 2014 010 748
- US-B2- 7 107 774
- US-B2- 8 453 461

## Description

### CROSS-REFERENCE TO RELATED APPLICATION

This application is a continuation in part of US application 14/496,835 filed September 25, 2014, which is based upon and claims priority under 35 U.S.C. 119(e) to Provisional Application No. 61/928897 filed January 17, 2014.

### FIELD OF INVENTION

Gas turbine exhaust emissions increase significantly (up to a factor of 300) below a specific load of operation (typically less than 50%) to a point that traditional emissions control systems can not sufficiently destroy the NOx, CO and VOC generated. This results in the plant emissions exceeding the permit compliant levels, forcing the facility to shut down or increase load. This decision can hamper the operation of the electrical grid and significantly degrade the economics of the operating plant. Increasing the emissions compliant operational range by utilizing additional emission control equipment in strategic areas will benefit the grid stability and operational flexibility of the plant, as well as reduce the overall plant emissions generated during steady-state operation and during startups and shutdowns.

These concerns are becoming increasingly difficult to overcome as the penetration of intermittent renewable energy sources increase the flexibility, low-load requirements and the more frequent startups and shutdowns that the grid operators desire to impose on the gas turbine based power plants.

### BACKGROUND OF THE INVENTION

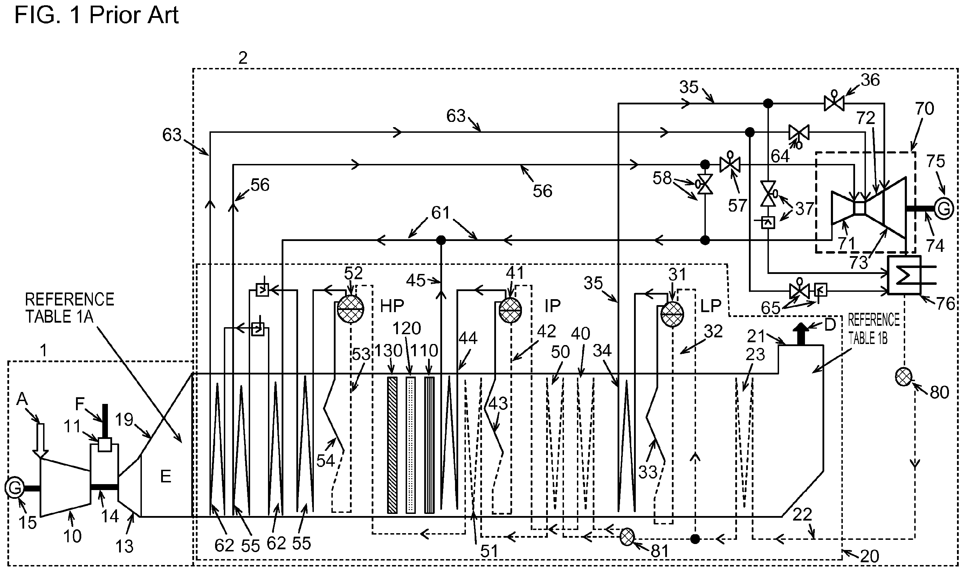

FIG. 1 shows a conventional combined cycle plant with a gas turbine cycle 1 and a water/steam cycle 2. In the gas cycle 1, air comes into the air compressor 10 and is mixed with fuel F in the combustion chamber 11 and burned. The combustion products are then fed into the turbine section 13 causing the turbine shaft 14 to rotate the generator 15 which generates electricity.

Exhaust E from the gas turbine 13 enters the transition duct 19 that leads to the HRSG 20 and is cooled as it passes over the water/ steam circuit, heating and boiling the water to steam. After it has given up the practical amount of energy (cooled) to the water/ steam cycle, it is exhausted out the HRSG stack 21. It is here, in the exhaust stack, where emissions are measured for reporting to the Environmental Protection Agency (EPA) and determining emissions compliance.

The water/steam cycle 2 consists of the HRSG 20, the Steam Turbine (ST) 70, a generator 75, and a condenser 76. The ST 70 consists of a high-pressure ("HP") section 71, an intermediate-pressure ("IP") section 72, and a low-pressure ("LP") section 73. Illustrated is a three pressure Reheat system, also allocable are three Pressure Non-Reheat, two Pressure and one Pressure HRSGs and Boilers. The IP section is sometimes referred to as the reheat turbine. The three ST sections 70, and the generator 75, are all on a common shaft 74. When the steam flows through the ST 70, it turns the shaft 74 and electricity is generated by the generator 75. This steam exits the ST 70 and flows to the condenser 76.

As also shown in FIG. 1, a conventional combined cycle plant typical includes additional conventional elements, for example, low pressure condensate 22, low pressure (LP) economizer 23, LP steam drum 31, LP downcomer 32, LP evaporator 33, LP superheater 34, pipe to LP section (73) of ST 35, LP bypass valve & de-superheater 37, IP economizer 40, IP steam drum 41, IP downcomer 42, IP evaporator 43, IP superheater 44, pipe to cold reheat pipe (61) 45, HP economizer 50, HP economizer 51, P downcomer 53, pipe to HP section (71) of ST 56, HP bypass Valve & de-superheater 58, cold reheat pipe 61, hot reheat pipe to IP section (72) of ST 63, RH bypass valve & de-superheater 65 and boiler feed pump 81, the operations of which are known and therefore not discussed in further detail.

During normal operation between full load and some minimum load, all the steam produced in the HRSG goes to the ST without pressure control (sliding pressure) and exits the ST LP section 73 into the condenser 76 where it is condensed into water to cycle back through the water/steam cycle 2 starting at pump 80.

The steam exiting the HRSG flows through valves [HP: 57, RH: 64 and LP: 36] going to the ST (ST inlet valves) to generate power as stated above. These valves can be used to control the pressure in water/steam circuit in their respective pressure levels if necessary under certain operating conditions.

The traditional configuration is to place all of this emissions control equipment downstream of the HP boiler drum in the exhaust stream. Shown in FIG. 1 is a medium temperature CO catalyst 130, then an ammonia injection grid 120, and finally a SCR Catalyst 110 for NOx control.

However, typical gas turbine power plants (GTPP), for example, the conventional combined cycle plant shown in FIG. 1, are typically designed to operate between 50% to 100% load to generate power while maintaining permit emissions compliance levels. Sometimes the plants include Duct Firing to gain capacity above the normal 100% load range. These levels are controlled by utilizing industry standard emissions control equipment. Below approximately 50% load, the gas turbine (GT) emissions can increase dramatically, over a factor of 300. See Table 1A to illustrate the local minimum. Note that there is a local minimum of emissions at 17% GT load in this example.

**Table 1A: GT Exhaust Emissions vs. GT Load**

| GT Load (%) | NOx | CO | VOC | NO/NOx (%) |
|---|---|---|---|---|
| 100 | 15 | 10 | 2 | 79 |
| 50 | 15 | 10 | 2 | 72 |
| 40 | 27 | 850 | 100 | 5 |
| 20 | 35 | 3000 | 1200 | 5 |
| 17 | 30 | 1200 | 280 | 5 |
| 5 | 40 | 2800 | 1500 | 5 |

| | | | | |
|---|---|---|---|---|
| Note: Values in ppmvd @ 15% O₂ unless noted | | | | |

This translates into traditional stack emissions as indicated in Table 1B for NOx, CO, and VOC. The upper load range from 100% load to approximately 50% load is where emissions compliance is achievable. The 50% load is where the emission from the GT are at a low enough level that the traditional post combustion clean up equipment can destroy enough emissions to have compliant levels at the stack. This 50% load point is often referred to as Minimum Emissions Compliant Load (MECL) for a gas turbine. The unit is out of emissions compliance at GT load ranges < approximately 50% load. This is a result of the engine characteristics at lower GT loads: a large increase in emissions and a large increase in the NO2 portion of NOx.

**Table 1B: Stack Exhaust Emissions vs. GT Load, Existing Technology**

| GT Load (%) | NOx | CO | VOC |
|---|---|---|---|
| 100 | 2 | 2 | 2 |
| 50 | 2 | 2 | 2 |
| 40 | 13 | 45 | 60 |
| 20 | 16 | 150 | 650 |
| 17 | 13 | 60 | 160 |
| 5 | 18 | 150 | 830 |

| | | | |
|---|---|---|---|
| Note: Values in ppmvd @ 15% O₂ unless noted | | | |

NOx emissions are comprised of NO and NO2. As GT load decreases below 50%, the constituents of the NOx shift from NO to NO₂ which is much more difficult to destroy. Selective Catalytic Reduction (SCR) De-NOx reactions, in which NOx is reduced into nitrogen by NH3, generally progress according to reaction (1) below. In cases where NO2 coexists with NO, reactions (2) and (3) occur. If the percentage of NO2 in NOx is less than 50% (GT loads ≥ 50%), NO2 and NO are removed by reaction (2), and the NO that remains is removed by reaction (1). If the percentage of NO2 in NOx is higher than 50% (GT loads < approximately 50%), NO2 in the remaining NOx component becomes rich as reaction (2) progresses. Under this circumstance, the De-NOx reaction drops significantly because reaction (3) is slow.

4NO + 4NH3 + O2 => 4N2 + 6H2O (1)

NO + NO2 + 2NH3 => 2N2 + 3H2O (2)

6NO2 + 8NH3 => 7N2 + 12H2O (3)

Traditional GTPP's may have an oxidation (CO) catalyst 130, an ammonia injection grid 120 and a SCR (NOx) catalyst 110 for controlling the emissions in the GT exhaust path, typically where the temperature is in the range of 260°C to 371°C (500°F to 700°F) (although somewhat higher temperatures are typical for gas turbine simple cycle plants). This equipment is typically located downstream of the HP evaporator tubes in combined cycle applications, where the temperature of the exhaust is appropriate for these chemical reactions to occur effectively. The traditional SCR catalyst 110 is designed to destroy relatively high concentrations of NO, and relatively low quantities of NO₂.

Another concept for purifying exhaust gases from a gas turbine is presented in US 2010/215558 A1. It discloses using a CO catalyst upstream of an evaporator as well as a HP heat exchanger and a SCR catalyst positioned downstream of the heat exchanger.

### SUMMARY OF THE INVENTION

In view of the above stated problems, it is one aspect of the present invention to allow gas turbine power plants (simple cycle, combined cycle or cogeneration) to operate continuously from 100% load down to approximately 40% load, and also at a very low load set point(s) (where there is a local minimum of GT emissions) or from 100% load continuously down to the local minimum while maintaining stack emissions compliance.

According to another aspect of the present invention cumulative emissions during startups and shutdowns of the gas turbine power plant will also be significantly reduced. This is achieved primarily by the addition of a series of oxidation (CO) catalysts (two or more) and, if necessary, a high NO₂ reduction SCR catalyst in the exhaust path, along with other salient features such as control system modifications and steam cycle management strategies.

In accordance with an aspect of the present invention an apparatus for a gas turbine power plant that uniquely configures emission control equipment such that the plant can extend the emissions compliant operational range, said apparatus comprising a plurality of oxidation (CO) catalysts arranged in series as defined in claim 1.

According to another aspect of the present invention a method for operating a gas turbine power plant with the apparatus is provided such that the plant can extend the emissions compliant operational range. According to the present invention the apparatus further comprises a NOx catalyst downstream of said plurality of oxidation catalysts that reduces NOx emissions to maintain emissions compliance at low loads as well as normal operating loads. According to another aspect of the present invention the apparatus further comprises at least one NOx catalyst that is capable of a high NO2 conversion rate and reduces NOx emissions to maintain emissions compliance at low loads as well as normal operating loads. According to another aspect of the present invention an existing power plant is retrofitted with said apparatus.

### BRIEF DESCRIPTION OF THE DRAWINGS

Further characteristics and advantages of the present invention will be more readily apparent from the description of the preferred but non-exclusive embodiments of the power plant and method, illustrated by way on non-limiting example in the accompanying drawings, in which:
FIG. **1** shows a conventional three pressure, reheat, combined cycle plant configuration, based on a gas turbine ("GT"), a heat recovery steam generator ("HRSG"), and a steam turbine ("ST"). The HRSG is also sometimes known as a waste heat steam generator.
FIG. **2** shows a combined cycle plant configuration according to an embodiment of the present invention.

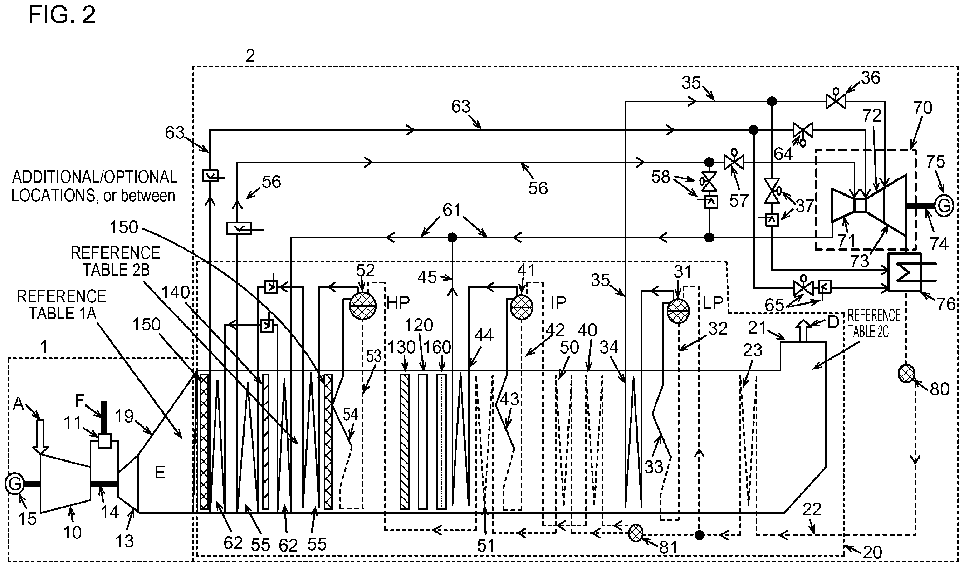

The same reference numerals have been used to identify similar elements in FIGs. 1 and 2.

### DETAIL DESCRIPTION OF THE PREFERRED EMBODIEMENTS

In the following, an embodiment of the present invention in which emissions control equipment is designed and configured differently, and is optimized for a broader operating range and lower emissions at low loads is described with reference to FIG. 2. That is, a GTPP designed with or without duct burners and operated in accordance with the embodiments of the present invention enables the example plant to operate at loads lower than 50% while maintaining stack emission compliance of low levels by uniquely utilizing emission control equipment and other salient features.

Specifically, as shown in FIG. 2, the emissions control equipment includes a plurality of CO catalysts 130, 140 and 150. The first catalyst in the gas path is a high temperature CO catalyst 140. This upstream oxidation (CO) catalyst 140 (in a high temperature region (> 427°C (> 800°F)) of the exhaust path) is located upstream of one or more downstream CO catalysts 130, 150, to make a first reduction of the CO emissions in the exhaust gas stream.
These sequential CO catalysts significantly improve the total reduction of the incomplete combustion products.

This CO and VOC reduction is illustrated by the difference between the original values from the GT in Table 1A to the values shown in Table 2B below (with a local minimum emissions at 17% GT load in this example). This catalyst 140 can be located anywhere upstream of the HP drum and downstream of the GT exhaust **(13)** depending on the specific plant design/operational conditions.

**Table 2B: Post High Temp. CO Catalyst Emissions vs. GT Load, New Technology**

| GT Load (%) | NOx | CO | VOC |
|---|---|---|---|
| 100 | 15 | 2 | 2 |
| 50 | 15 | 2 | 2 |
| 40 | 27 | 43 | 20 |
| 20 | 35 | 150 | 642 |
| 17 | 28 | 60 | 50 |
| 5 | 38 | 140 | 829 |

| | | | |
|---|---|---|---|
| Note: Values in ppmvd @ 15% O₂ unless noted | | | |

One or more downstream oxidation (CO) catalysts 130, 150 are located in a lower temperature region (< 427°C (< 800°F)) of the exhaust path to make additional reductions of the CO emissions in the exhaust gas stream.

As shown in FIG. 2 a special high NO₂ reduction SCR catalyst 160 is located downstream of the CO catalysts 130, 140, 150, typically in a medium temperature region (approx. 260°C to 399°C (500°F to 750°F)) of the exhaust path to reduce NOx emissions that may contain high concentrations of NO₂. However, if high NO₂ concentrations do not exist, an industry standard SCR catalyst 110 can be employed. The SCR catalyst 160 is designed for high NO₂ reduction where required for low load operation. The high NO₂ reduction is achieved by utilizing a special high NO₂ SCR catalyst **160.** One such design is described in US Patent 7,749,938.

As also shown in FIG. 2 an ammonia injection grid 120 located upstream of the SCR catalyst 160 is designed for both high load and low load flow conditions. Additionally, although not shown in Fig. 2, a conventional SCR catalyst 110 can be used for NOx control in place of the special high NO₂ reduction SCR catalyst 160 if high NO₂ concentrations do not exist. In addition to the above novelties, additional design and control enhancements may be required to achieve the desired emissions, such as enhanced plant control systems and final stage attemperation. Such equipment and systems are well known, and are therefore not described in detail.

In a method of operating, for example, the combined cycle plant configuration shown in FIG. 2, during normal operation the exhaust gas from the GT first encounters the high temperature CO catalyst 140 where the CO is first reduced to a lower level based on the design. Once the gas passes through it the gas is cooled through the HP superheater 55 and Reheater 62, and then further cooled through the HP boiler drum tubes 54. The catalysts 130, 140, 150 and 160 are designed to operate in this range of exhaust temperature in order to maintain the emissions at the required stack 21 levels. The medium temperature CO catalyst 130 will reduce the remaining CO in the gas to permit limits (or a third CO catalyst 150 can be installed). The ammonia injection grid 120 then injects ammonia into the gas stream, and the mixture is then carried to the SCR catalyst 160 where the NOx is reduced to permit compliant levels.

At lower loads the amount of CO emissions significantly increases to a point that a single CO catalyst cannot destroy enough CO to maintain stack compliant levels. Also, the NOx levels increase and the ratio of NO₂ to NO increases, such that the amount of ammonia and SCR catalyst required becomes uneconomical using traditional methods.

During low load and very low load operation, the HP drum 52 pressure is maintained in the higher load range (pressure) in order to maintain the high reaction rates in the emissions catalysts. For combined cycle and cogeneration plants, the HP steam circuit is designed and tuned to hold the HP drum 52 pressure up to a point that optimizes the effectiveness of the catalysts in the medium temperature region at lower loads, which is achieved by throttling down on the HP ST inlet control valve.

The multiple reduction in the CO catalysts attains a very high combined CO reduction rate and maintains the low stack emissions at the very low load operation. The specialized NOx catalyst 160 with the enhanced NO₂ destruction, when needed, allows for higher concentration of NO₂ to be reduced to the acceptable range of NOx exiting the stack.

Table 3B below illustrates one example where stack emissions compliance can be achieved by employing this invention (with a local minimum emissions at 17% GT load in this example). Added layers of catalyst can achieve emissions guaranteed levels from 100% load continuously down to the local minimum.

**Table 3B: Stack Exhaust Emissions vs. GT Load, New Technology**

| GT Load (%) | NOx | CO | VOC |
|---|---|---|---|
| 100 | 2 | 2 | 2 |
| 50 | 2 | 2 | 2 |
| 40 | 2 | 2 | 5 |
| 20 | 6 | 10 | 360 |
| 17 | 4 | 4 | 10 |
| 5 | 6 | 8 | 460 |

| | | | |
|---|---|---|---|
| Note: Values in ppmvd @ 15% O₂ unless noted | | | |

According to another embodiment of the present invention, while it is has been described that the upstream oxidation (CO) catalyst 140 is located upstream of one or more downstream CO catalysts 130, 150, to make a first reduction of the CO emissions in the exhaust gas stream, as shown in FIG. 2, an additional CO catalyst 150 can be provided upstream of the high temperature CO catalyst 140 in order to provide additional reduction of the CO emissions in the exhaust gas stream if needed.

According to another embodiment of the present invention an existing GTPP can be retrofitted by adding the additional catalyst(s) 140, 150 aforementioned and/or by replacing an existing SCR (NOx) catalyst 110 with a high NO₂ SCR catalyst 160 where necessary.

According to another embodiment of the present invention, cumulative emissions during startups and shutdowns of the gas turbine power plant will also be significantly reduced. This is achieved primarily by the addition of a series of oxidation (CO) catalysts 130, 140, 150 (two or more) and, if necessary, a high NO₂ reduction SCR catalyst 160 in the exhaust path, along with other salient features such as control system modifications and steam cycle management strategies.

In addition, while the embodiments of the present invention have been described with reference to the combined cycle plant configuration, it is readily understood that the aforementioned features of the present invention can used in other plant configuration including but not limited to ST full or partial bypass operation, simple cycle operation, single or double pressure level combined cycles and cogeneration cycles.

### List of Reference elements

Transition Duct 19
HRSG Casing 20
HRSG Stack 21

Low Pressure (LP)
   Low Pressure Condensate 22
   Low Pressure (LP) Economizer 23
   LP Boiler Drum 31
   LP Downcomer 32
   LP Evaporator 33
   LP Superheater 34
   Pipe to LP Section (73) of ST 35
   LP Valve 36 - for Fig 2 component has added tuned operational range
   LP Bypass Valve & De-superheater 37
Intermediate Pressure (IP) / Reheat
   IP Economizer 40
   IP Steam Drum 41
   IP Downcomer 42
   IP Evaporator 43
   IP Superheater 44
   Pipe to Cold Reheat pipe (61) 45
High Pressure (HP)
   HP Economizer 50
   HP Economizer 51
   HP Steam Drum 52
   HP Downcomer 53
   HP Evaporator 54
   HP Superheater 55
   Pipe to HP Section (71) of ST. 56
   Valve (HP) 57 - for Fig 2 component has added tuned operational range
   HP Bypass Valve & De-superheater 58
Hot Reheat (HRH)
   Cold Reheat Pipe 61
   Reheat Section 62
   Hot Reheat Pipe to IP Section (72) of ST 63
   RH Valve 64 - for Fig 2 component has added tuned operational range
   RH Bypass Valve & De-superheater 65
ST & Condensate
   ST Combined Sections 70
   HP Steam Turbine 71
   IP Steam Turbine 72
   LP Steam Turbine 73
   Common Turbine Shaft 74
   Generator 75
   Condenser 76
   Condensate Pump 80
   Boiler Feed Pump 81
Selective Catalytic Reduction (deNOx) 110
Ammonia Injection Grid 120
Medium Temp Oxidation Catalyst Location 130
High Temp Oxidation Catalyst 140
High Temp Oxidation Cat Optional Location Range 150
Selective Catalytic Reduction (High NO₂) 160
Working Fluids
   A - Ambient Air
   D - Stack Discharge
   E - GT Exhaust
   F - Fuel

## Claims

1. An apparatus for a gas turbine power plant that configures emission control equipment such that the plant can extend the emissions compliant operational range below the traditional Gas Turbine Minimum Emissions Compliance Load (GT MECL), said apparatus comprising:
a plurality of sequential oxidation (carbon monoxide (CO)) catalysts arranged in series, a Selective Catalytic Reduction (SCR) catalyst downstream of the plurality of oxidation catalysts that is capable of a high NO2 conversion rate and reduces NOx emissions to maintain emissions compliance at low loads as well as normal operating loads,
wherein one of the plurality of CO catalysts is provided in a first region configured to be operated at a temperature of more than 427°C (800°F) and at least one of the plurality of CO catalysts is provided downstream of said first region in a second region configured to be operated at a temperature of less than 427°C (800°F).

2. A method for operating a gas turbine power plant with the apparatus described in claim 1 such that the plant can extend the emissions compliant operational range below the traditional GT MECL, the method comprising:
- operating the GT at a load point below 50% load;
- reducing the GT CO and Volatile Organic Compound (VOC) emissions in an exhaust stream using said CO catalysts in said first region;
- reducing the GT CO and VOC emissions to the level that is required to achieve stack emissions compliance using said CO catalysts in said second region;
- injecting NH3 to reduce the NOx emissions to achieve stack emissions compliance.

3. An existing power plant that is retrofitted with said apparatus according to claim 1.

## Patentansprüche

1. Ein Apparat für ein Gasturbinenkraftwerk, das ein Emissionskontrollgerät so konfiguriert, dass das Werk den emissionskonformen Betriebsbereich unter die herkömmliche Gasturbinen-Minimum-Emissionskonformitätslast (GT MECL) ausdehnen kann, wobei jener Apparat umfasst:
eine Vielzahl von sequenziellen Oxidations- (Kohlenmonoxid (CO)) Katalysatoren in Serie,
einen selektiven katalytischen Reduktions- (SCR) Katalysator nach der Vielzahl von Oxidationskatalysatoren, der zu einer hohen NO₂ Umwandlungsrate fähig ist und die NOₓ Emissionen reduziert, um Emissionskonformität bei geringer Last wie auch bei normaler Last beizubehalten,
wobei einer der Vielzahl von CO Katalysatoren in einem ersten Bereich bereitgestellt wird, der konfiguriert ist, um bei einer Temperatur von mehr als 427°C (800°F) betrieben zu werden und mindestens einer der Vielzahl von CO Katalysatoren in einem zweiten Bereich nach jenem ersten Bereich bereitgestellt wird, der konfiguriert ist, um bei einer Temperatur von weniger als 427°C (800°F) betrieben zu werden.

2. Ein Verfahren zum Betrieb eines Gasturbinenkraftwerks mit dem Apparat wie in Anspruch 1 beschrieben, so dass das Werk den emissionskonformen Betriebsbereich unter die herkömmliche GT MECL ausdehnen kann, wobei das Verfahren umfasst:
- Betrieb der GT bei einem Lastpunkt von unter 50% Last;
- Reduzierung der GT CO und volatilen organischen Verbindungs- (VOC) Emissionen in einem Auspuffstrom unter Verwendung jener CO Katalysatoren in jenem ersten Bereich;
- Reduzierung der GT CO und VOC Emissionen auf das Level, das zur Erreichung von Schornsteinemissions-Konformität benötigt wird unter Verwendung jener CO Katalysatoren in jenem zweiten Bereich;
- Einspritzen von NH₃ zur Reduzierung der NOₓ Emissionen, um Konformität mit Schornsteinemissionen zu erreichen.

3. Ein bestehendes Kraftwerk, das mit jenem Apparat nach Anspruch 1 nachgerüstet wird.

## Revendications

1. Appareil pour une centrale électrique à turbines à gaz qui configure un équipement de commande des émissions de sorte que la centrale puisse étendre le périmètre opérationnel conforme des émissions sous la traditionnelle charge minimale de conformité des émissions de turbine à gaz (GT MECL), ledit appareil comprenant :
une pluralité de catalyseurs d'oxydation séquentiels (monoxyde de carbone (CO)) agencés en série, un catalyseur de réduction catalytique sélective (SCR) en aval de la pluralité de catalyseurs d'oxydation qui est capable d'un taux de conversion de NO2 élevé et qui réduit les émissions de NOx pour maintenir une conformité des émissions à faibles charges ainsi qu'à des charges de fonctionnement normales,
dans lequel l'un de la pluralité de catalyseurs de CO est prévu dans une première région configurée pour fonctionner à une température supérieure à 427 °C (800 °F) et au moins l'un de la pluralité de catalyseurs de CO est prévu en aval de ladite première région dans une seconde région configurée pour fonctionner à une température inférieure à 427 °C (800 °F).

2. Procédé pour faire fonctionner une centrale électrique à turbines à gaz avec l'appareil décrit dans la revendication 1 de sorte que la centrale puisse étendre le périmètre opérationnel conforme des émissions sous la traditionnelle GT MECL, le procédé comprenant :
- le fait de faire fonctionner la turbine à gaz à un point de charge inférieur à 50 % de charge ;
- la réduction des émissions de CO et de composés organiques volatils (COV) de la turbine à gaz dans un flux d'échappement en utilisant lesdits catalyseurs de CO dans ladite première région ;
- la réduction des émissions de CO et de COV de la turbine à gaz jusqu'au niveau requis pour assurer la conformité des émissions de cheminée en utilisant lesdits catalyseurs de CO dans ladite seconde région ;
- l'injection de NH3 pour réduire les émissions de NOx pour assurer la conformité des émissions de cheminée.

3. Centrale électrique existante qui est rénovée avec ledit appareil selon la revendication 1.
